**Europäisches Patentamt**

**European Patent Office**

**Office européen des brevets**

(11) Veröffentlichungsnummer: **0 538 707 A1**

## EUROPÄISCHE PATENTANMELDUNG

(21) Anmeldenummer: **92117415.7**

(22) Anmeldetag: **12.10.92**

(51) Int. Cl.5: **H05G 1/26**, G01N 23/04

(30) Priorität: **25.10.91 DE 4135283**

(43) Veröffentlichungstag der Anmeldung:
**28.04.93 Patentblatt 93/17**

(84) Benannte Vertragsstaaten:
**BE DE FR GB**

(71) Anmelder: **Heimann Systems GmbH & Co. KG**
**Weher Köppel 6**
**W-6200 Wiesbaden(DE)**

(72) Erfinder: **Bartscher, Bernd, Dipl.-Ing.**
**Felsenstrasse 11**
**W-6200 Wiesbaden(DE)**
Erfinder: **Dönges, Gerhard, Dipl.-Ing.**
**Am Markt 1**
**W-6209 Heidenrod-Kemel(DE)**

(74) Vertreter: **Fuchs, Franz-Josef, Dr.-Ing. et al**
**Postfach 22 13 17**
**W-8000 München 22 (DE)**

(54) **Röntgenscanner.**

(57) Bei einem Röntgenscanner für die Untersuchung von Prüfgut (4) soll ein von Schwankungen der Strahlenintensität unabhängiges Ausgangssignal des Detektors (6) und damit ein störungsfreies Bild erzeugt werden.

Es ist ein von ungeschwächter Röntgenstrahlung getroffener Referenzdetektor (10) vorhanden, wobei die Detektorsignale durch das Signal des Referenzdetektors (10) dividiert werden.

FIG 1

Rank Xerox (UK) Business Services
(3.10/3.5x/3.0.1)

Die Erfindung betrifft einen Röntgenscanner mit einem Röntgenstrahler auf einer und einem aus einer Reihe von Detektorelementen bestehenden, zeilenförmigen Detektor auf der anderen Seite einer Transportstrecke für Prüfgut sowie mit einer Elektronik mit einem Sichtgerät zur Erzeugung eines Bildes des Prüfgutes.

Ein Röntgenscanner dieser Art dient zum Beispiel zur Untersuchung von Gepäck auf unzulässigen Inhalt, wie Waffen. Durch Schwankungen der Strahlungsintensität wird das Nutzsignal, d.h. das Ausgangssignal der Detektorelemente, moduliert, was zu Mustern führt, die dem aus den Ausgangssignalen der Detektorelemente erzeugten Bild überlagert sind.

Der Erfindung liegt die Aufgabe zugrunde, einen Röntgenscanner der eingangs genannten Art so auszubilden, daß Schwankungen der Strahlungsintensität des Röntgenstrahlers keine negativen Auswirkungen auf die Bildqualität haben.

Diese Aufgabe ist erfindungsgemäß dadurch gelöst, daß ein von ungeschwächter Röntgenstrahlung getroffener Referenzdetektor vorhanden ist, dessen Ausgangssignal einer Divisionsstufe zugeführt wird, die die Detektorsignale durch das Signal des Referenzdetektors dividiert. Bei diesem Divisionsvorgang wird die Modulation der Nutzsignale, d.h. der Ausgangssignale der Detektorelemente beseitigt.

Die Erfindung ist nachfolgend anhand eines in der Zeichnung dargestellten Ausführungsbeispieles näher erläutert. Es zeigen:

Fig. 1    einen Röntgenscanner nach der Erfindung, und

Fig. 2    eine Einzelheit des Röntgenscanners gemäß Fig. 1.

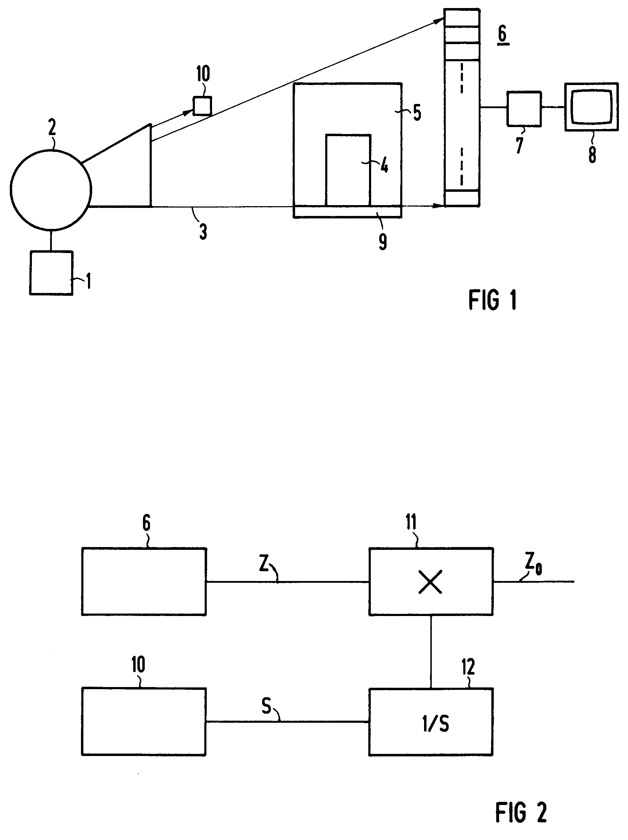

In der Fig. 1 ist ein von einem Röntgengenerator 1 gespeister Röntgenstrahler 2 dargestellt, der ein fächerförmiges Röntgenstrahlenbündel 3 aussendet, dessen Fächerebene in der Zeichenebene liegt. Durch das Röntgenstrahlenbündel 3 wird Prüfgut 4 senkrecht zur Zeichenebene befördert. Das Röntgenstrahlenbündel 3 trifft, nachdem es das Meßfeld 5 durchsetzt hat, auf einem aus einer Reihe von Detektorelementen bestehenden, zeilenförmigen Detektor 6 auf. Die Ausgangssignale der Detektorelemente des Detektors 6 werden einer Elektronik 7 zugeführt, die diese zum Beispiel mit Hilfe eines Multiplexers nacheinander abfragt und zu einem Schattenbild des Prüfgutes 4 verarbeitet, das auf einem Sichtgerät 8 wiedergegeben wird. Für die Untersuchung eines vorbestimmten Volumens des Prüfgutes 4 wird dieses durch eine Transportstrecke 9 senkrecht zur Zeichenebene durch das Meßfeld 5 befördert.

Durch Schwankungen der Strahlenintensität wird das Nutzsignal der Detektorelemente des Detektors 6 moduliert, was zu Mustern führt, die dem Bild überlagert sind. Der Referenzdetektor 10 erfaßt die Strahlungsintensität des Röntgenstrahlers 10 dort, wo keine Abschwächung durch das Prüfgut 4 vorliegt. Das Referenzsignal S des Referenzdetektors 10 ist ein Maß für den 100%-Wert der Zeilensignale Z des Detektors 6. Das Referenzsignal S und die Zeilensignale Z sind mit dem gleichen Modulationsgrad M moduliert. $S = S_0 \times M$, $Z = Z_0 \times M$, $S_0$ und $Z_0$ sind dabei die unmodulierten Signale. Setzt man $S_0$ zu 1, kann man Z von der Modulation befreien, indem Z durch S dividiert wird. $Z/S = (Z_0 \times M) : (S_0 \times M) = Z_0$.

In der Fig. 2 ist eine Schaltungsanordnung zur Ausführung dieser Rechenoperationen dargestellt. Die Zeilensignale Z des Detektors 6 werden einer Multiplikationsstufe 11 zugeführt, die Z mit dem Bruch 1/S multipliziert. Der Bruch 1/S wird in einer Divisionsstufe 12 gebildet, die das Referenzsignal S vom Referenzdetektor 10 erhält. Auf diese Weise liefert die Multiplikationsstufe 11 das unmodulierte Zeilensignal $Z_0$.

**Patentansprüche**

1.    Röntgenscanner mit einem Röntgenstrahler (2) auf einer und einem aus einer Reihe von Detektorelementen bestehenden, zeilenförmigen Detektor (6) auf der anderen Seite einer Transportstrecke (9) für Prüfgut (4) sowie mit einer Elektronik (7) mit einem Sichtgerät (8) zur Erzeugung eines Bildes des Prüfgutes (4), bei dem ein von ungeschwächter Röntgenstrahlung getroffener Referenzdetektor (10) vorhanden ist, wobei die Detektorsignale (Z) durch das Signal des Referenzdetektors (S) dividiert werden.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | GB-A-2 181 330 (KABUSHIKI KAISHA TOSHIBA) <br> * Seite 1, Zeile 5 - Zeile 70 * <br> * Seite 4, Zeile 88 - Seite 5, Zeile 14; Abbildung 1 * <br> --- | 1 | H05G1/26 <br> G01N23/04 |
| Y | US-A-3 766 383 (G.R. HARRIS ET AL.) <br> * Spalte 2, Zeile 11 - Zeile 51 * <br> * Spalte 3, Zeile 20 - Zeile 65; Abbildung 1 * <br> --- | 1 | |
| A | DE-A-3 825 703 (SIEMENS AG) <br> * Zusammenfassung * <br> * Spalte 4, Zeile 57 - Zeile 67; Abbildung 1 * <br> --- | 1 | |
| A | US-A-4 366 382 (A.F. KOTOWSKI) <br> * Spalte 1, Zeile 60 - Spalte 2, Zeile 17 * <br> * Spalte 5, Zeile 21 - Zeile 40 * <br> * Spalte 6, Zeile 4 - Zeile 17 * <br> --- | 1 | |
| A | EP-A-0 395 762 (YOKOGAWA MEDICAL SYSTEMS, LTD) <br> * Seite 10, Zeile 2 - Seite 11, Zeile 11; Abbildung 1 * <br> --- | 1 | RECHERCHIERTE SACHGEBIETE (Int. Cl.5 ) <br><br> H05G <br> G01N <br> G01V |
| A | WO-A-8 800 697 (HPLPGIC, INC.) <br> * Zusammenfassung * <br> * Seite 6, Zeile 21 - Seite 9, Zeile 8; Abbildungen 1,3 * <br> --- | 1 | |
| A | DE-C-1 085 339 (GENERAL ELECTRIC COMPANY) <br> * Spalte 3, Zeile 12 - Zeile 70 * <br> * Spalte 5, Zeile 30 - Zeile 61; Abbildungen 1,3 * <br><br> ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 21 JANUAR 1993 | HORAK G.I. |